# EUROPEAN PATENT SPECIFICATION

(11) **EP 2 124 151 B1**
(45) Date of publication and mention of the grant of the patent: **27.06.2012**
(21) Application number: 07850718.3
(22) Date of filing: 17.12.2007
(51) Int. Cl.: G06F 12/16, G06F 9/445, G06F 11/16, G06F 11/10, G06F 11/20

(54) **INFORMATION PROCESSING SYSTEM AND METHOD FOR STARTING/RECOVERING THE SYSTEM**
INFORMATIONSVERARBEITUNGSSYSTEM UND VERFAHREN ZUM STARTEN/WIEDERHERSTELLEN DES SYSTEMS
SYSTÈME ET PROCÉDÉ DE TRAITEMENT DES INFORMATIONS POUR LANCER OU RESTAURER LE SYSTÈME

(30) Priority: 18.12.2006 JP 2006340224; 30.07.2007 JP 2007198183
(43) Date of publication of application: 25.11.2009
(73) Proprietor: International Business Machines Corporation, Armonk, NY 10504 (US)
(72) Inventor: ABE, Atsushi, Yamato-shi Kanagawa 242-8502 (JP); KIMURA, Tomoaki, Yamato-shi Kanagawa 242-8502 (JP)
(74) Representative: Ling, Christopher John
(86) International application number: PCT/JP2007/074230
(87) International publication number: WO 2008/075646

(56) References cited:
- JP-A- 2000 148 467
- JP-A- 2000 148 467
- JP-A- 2004 013 719
- JP-A- 2004 013 719
- US-A- 5 835 695

## Description

### Technical Field

This invention relates to an information processing system such as a personal computer. In particular, the invention relates to an information processing system including multiple read-only memory (ROM) images each storing a basic input output system (BIOS) program for executing initialization and so forth during a boot.

### Background Art

A BIOS program generally includes a BIOS main body (core block) for executing initialization of various types of devices, loading of an operating system (OS), and so forth and a boot block that boots up immediately after a computer is turned on or reset to execute a cyclic redundancy check (CRC) or the like to detect an error and returns control to the BIOS main body if there is no problem. The BIOS program's failure in operating normally prevents the computer from booting up, so some configurations have been adopted to cope with such failure.

In general, a central processing unit (CPU) reads and executes an instruction from an address set up in a program counter. When the power is turned on, the program counter is set to a default, which typically refers to the top of an initialization code in a ROM. Incidentally, writable flash ROMs have often been used as ROMs in recent years. This is advantageous in that a flash memory can be rewritten without having it to be removed even if a problem has occurred in a program.

Corruption or erasure of an initialization code per se in a flash ROM prevents the system from booting up. Therefore, the initialization code is handled in a special manner as a boot block in the flash ROM, and its rewriting is restrained as much as possible. For this reason, the initialization code stored in the boot block is generally programmed so as to be processed independently of a function block. Upon completing initialization of the system, the initialization code transfers control to the function block and the system performs ordinary processes.

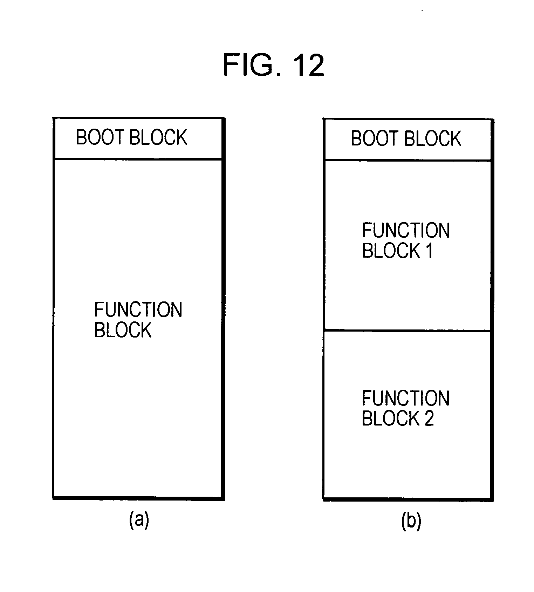

FIGS. 12(a) and 12(b) each show an example of a flash ROM including a boot block. A boot block is typically disposed from a memory address of 0 and a function block is disposed in a subsequent address. This disposition may vary depending on the type of a CPU used in an information processing (computer) system. The examples shown in FIGS. 12(a) and 12(b) each have only one boot block. On the other hand, the example shown in FIG. 12(a) has one function block and the example shown in FIG. 12(b) has two function blocks. If there are multiple function blocks, for example, two function blocks as shown in FIG. 12(b), a function block 1 includes a new function code and a function block 2 includes the preceding function code. The older function code in the function block 2 is rewritten at the subsequent rewriting. This is because even if rewriting of the function code in the function block 2 fails due to a certain problem, use of the remaining function code in the function block 1 allows the CPU to operate. However, the flash ROM cannot have multiple boot blocks unlike such function blocks. This is because if the CPU is reset and then booted, it attempts to operate initially from an address of 0, thereby requiring disposition of the boot block in this position. In other words, the boot block can be disposed in only one position as a rule.

An information processing system using the flash ROM shown in FIG. 12(a) or the one shown in FIG. 12(b) has the following problem. That is, the initialization code in the boot block is a program to be executed at power-on, so it must be executed from an address (address of 0 in principle) indicated by the program counter. However, since the ROM has only one boot block, the system cannot operate if the content of the ROM gets corrupted for some reason. If a problem occurs in the boot block including the initialization code, the ROM itself must be removed and a ROM having a normal boot block must be remounted. This task takes time and is costly.

In order to solve the above-mentioned problem, methods for preparing multiple ROM images for storing multiple BIOS programs and switching between these ROM images have been disclosed. For example, disclosed in Patent Document 1 is a method for, in a system having two ROM regions (BIOS ROMA, BIOS ROMB) and an address switching circuit for rendering the two ROMs selectively accessible, changing the status of the address switching circuit using a boot block only if it is detected that one of the two ROM regions is imperfect, using an error at a rewrite or a checksum at a boot, and then booting the other ROM region having no problem. However, this method has a problem in that if a problem occurs in the boot block itself, the switching between these ROM regions cannot be performed.

Disclosed in Patent Document 2 is a system that includes a flash ROM storing two BIOS programs (each including a BIOS main body and a boot block), in other words, multiple ROM images, an address switch for making the multiple ROM images selectively accessible, and a watchdog timer (WDT). Even if a problem occurs in a ROM image usually booted and the initialization code in the boot block cannot be booted up, such a problem is detected by the WDT and a BIOS program in a ROM image having no problem is booted. In this case, if the ROM is rewritten unintentionally between the time of the periodical WDT operation, the system may not boot up.

A related art example disclosed in Patent Document 3 includes two BIOS data blocks (each including a boot block and a core block) stored in a flash ROM. It also includes an address switching unit for switching between the addresses of two BIOS programs in the flash ROM on the basis of information stored in a non-volatile memory (NRAM). Which of the pieces of BIOS data should be rewritten is determined using a valid flag indicating which of the pieces of BIOS data stored in the NRAM is being used for the current boot and an update flag indicating that a rewrite has been completed normally. That is, it is intended that the system is booted normally by distinguishing between a piece of BIOS data to be read and a piece of BIOS data to be rewritten even if rewriting of a piece of BIOS data fails at the subsequent boot. In this case, since a boot block includes a program for identifying an effective BIOS block, the system may not boot up if a boot block that cannot be rewritten has a problem.

As for detecting an error in a memory, a related art example disclosed in Patent Document 4 simultaneously controls reading and writing of data in an identical position of each of multiple memory blocks included in a random access memory (RAM). This control allows detection of an error by determining whether or not pieces of data read out of the identical position of each of the multiple memory blocks are identical to one another, on the basis of a computation result from an exclusive OR circuit. As a result, the processing time for detecting an error can be reduced. Similarly, disclosed in Patent Document 5 is a method for, in a storage device assigned multiple RAMs, making a determination on data in a position of an RAM in which an error has occurred, according to a majority rule using a majority logic circuit and an exclusive OR circuit. However, these related art examples can be applied only to RAMs and the number of RAMs must be odd. Further, correct data must always be entered into an odd number (at least three) of RAMs.

Disclosed in Patent Document 6 is an information processing system including a plurality of basic input output system (BIOS) programs, the system comprising: a memory including: a first read-only memory (ROM) image storing a BIOS program; and a second ROM image serving as a replica of the first ROM image; a switch, the switch initially selecting the first ROM image so as to boot the system using the BIOS program of the first ROM image. Also disclosed is an error detection circuit which performs a checksum operation on the first ROM image. If there is no data error detected, then the computer continues to boot using the first ROM image in the conventional fashion. If the first ROM image contains an error, an error flag is set and a chip enable circuit selects the second ROM image.

The checksum is a one-off check at power-on of the validity of the data in the identical copies of the ROM image. Any subsequent errors that occur will not be detected. The checksum is calculated by the CPU. That means that if the CPU is not operating normally because of an error in the stored program code, than it will not be able to calculate a checksum. The stored program code is usually in the ROM image itself. This means that the item that checks for errors will itself likely not work if there is such an error.

Disclosed in Patent Document 7 is identical programs stored in first and second non-volatile memories with irregularities detected by comparing data read from the two memories by a comparator.
[Patent Document 1] Japanese Unexamined Patent Application Publication No. 2000-148467
[Patent Document 2] Japanese Unexamined Patent Application Publication No. 2004-038529
[Patent Document 3] Japanese Unexamined Patent Application Publication No. 2000-163268
[Patent Document 4] Japanese Unexamined Patent Application Publication No. 05-28056
[Patent Document 5] Japanese Unexamined Patent Application Publication No. 61-61299
[Patent Document 6] United States Patent Publication No. 5,835,695
[Patent Document 7] Japanese Unexamined Patent Application Publication No. 2004-013719

### Problems to be Solved by the Invention

Accordingly, the present invention seeks to allow an information processing system to boot up without any trouble even if the boot block of a BIOS program stored in a ROM is damaged or has a problem (or a failure) for some reason at a boot of the system.

The present invention also allows an information processing system to replace a ROM image in a ROM that has been damaged or has had a problem at a boot of the system, with a normal ROM image so as to recover the damaged ROM image.

### Means for Solving the Problems

To solve the above-mentioned problems, this invention provides an information processing system that includes multiple, identical ROM images and uses a comparison circuit (e.g., exclusive OR (XOR) circuit) for checking whether or not the multiple ROM images have identical contents and a switch for switching between the ROM images (address thereof) to switch a ROM image including a damaged boot block or the like to another ROM, which is normal, to boot up, as well as provides a method for booting the information processing system. This invention also provides an information processing system and a method that both replace a damaged ROM image with a normal ROM image so as to recover the damage ROM image.

According to a first aspect of this invention, an information processing system includes a plurality of basic input output system (BIOS) programs, the system comprising: a memory including: a first read-only memory (ROM) image storing a BIOS program; and a second ROM image serving as a replica of the first ROM image; and a switch, the switch initially selecting the first ROM image so as to boot the system using the BIOS program of the first ROM image and, if the contents are different, switching the selected first ROM image to the second ROM image. The system is characterised by further comprising: a comparison circuit coupled to the memory, the comparison circuit comparing contents of the first and second ROM images outputted from the memory; an error data pattern detector coupled to the memory and the switch, the detector detecting an error data pattern in the first and second ROM images outputted from the memory and inputting a detection result to the switch, the switch switching the selected first ROM image to the second ROM image; and wherein the switch is coupled to the comparison circuit, the contents of the first and second ROM images being determined to be different as a result of a comparison performed by the comparison circuit.

The comparison circuit is preferably an exclusive OR circuit. The switch is preferably an address switch for switching between addresses of ROM images. The memory preferably further stores a program code for outputting the data contents of the ROM images.

In order to detect which of the ROM images is damaged if the data contents are different, the information processing system according to the first aspect of this invention further includes an error data pattern detector for detecting an error data pattern in the first and second ROM images and inputting a detection result to the switch. If an error data pattern is detected in one of the first and second ROM images by this error data pattern detector, the switch switches to the other ROM image.

The memory is preferably a flash ROM. The first and second ROM images are preferably stored in one flash ROM or stored in different flash ROMs separately.

According to a second aspect of this invention, a method for booting an information processing system, the information system comprising a memory including a first read-only memory (ROM) image storing a basic input output system (BIOS) program and a second ROM image serving as a replica of the first ROM image, the method comprising the steps of: selecting a first ROM image so as to boot the system using the BIOS program of the first ROM image; comparing contents of the first and second ROM images; and if the contents are different in the comparison, switching the selected first ROM image to the second ROM image. The method is characterised in that: the comparing step is performed by a comparison circuit coupled to the memory, the comparison circuit comparing contents of the first and second ROM images outputted from the memory; detecting whether or not there is an error data pattern in the ROM images by comparing contents of the first and second ROM images outputted from the memory; response to said detection step, switching the selected first ROM image to the second ROM image.

The method according to the second aspect of this invention preferably further includes the step of, if the error data pattern is detected in the second ROM image, replacing the second ROM image with the first ROM image. The method according to the third aspect of this invention preferably further includes the step of, if the error data pattern is detected in none of the first and second ROM images, displaying a system error.

According to a third aspect of this invention, a computer program comprises program code means adapted to perform the method disclosed above when said program is run on a computer.

### Brief Description of the Drawings

Embodiments of the invention will now be described, by way of example only, with reference to the accompanying drawings in which:
FIG. 1 is a diagram showing the overall configuration of an information processing system according to this invention;
FIG. 2 is a diagram showing an ROM image in a flash ROM;
FIG. 3 is a diagram showing an information processing system including a boot/recovery mechanism according to a first embodiment of this invention;
FIG. 4 is a diagram showing an information processing system including a boot/recovery mechanism having an error data pattern detection circuit according to a second embodiment of this invention;
FIG. 5 is a flowchart showing operations of the first embodiment having the configuration shown in FIG. 3;
FIG. 6 is a diagram showing the relation between a method for writing data to a flash ROM and an error data pattern (FF);
FIG. 7 is a flowchart showing operations of the second embodiment having the configuration shown in FIG. 4;
FIG. 8 is a diagram showing an information processing system including two ROM image pairs according to a third embodiment of this invention;
FIG. 9 is a flowchart showing operations of the third embodiment having the configuration shown in FIG. 8;
FIG. 10 is a diagram showing an information processing system including N units of ROM image pairs according to this invention;
FIG. 11 is a flowchart showing operations of an embodiment having the configuration shown in FIG. 10; and
FIGS. 12(a) and (b) each show an example of a ROM image storing a BIOS program according to related art. FIG. 12(a) is an example of a ROM image having a single functional block and FIG. 12(b) is an example of a ROM image having multiple functional blocks.

### Reference Numerals

100: information processing system
102: CPU
106: memory
112: bus
122: display controller
124: external display
126: hard disk drive (HDD) controller
128: hard disk drive (HDD)
132: communication adapter
134: communication network
200: ROM (flash ROM)
202: ROM image 1
204: ROM image 2
210: BIOS program 1
220: BIOS program 2
300: boot/recovery mechanism
302: comparison circuit
304: address switch
306: system resetter
308: error data pattern detection circuit

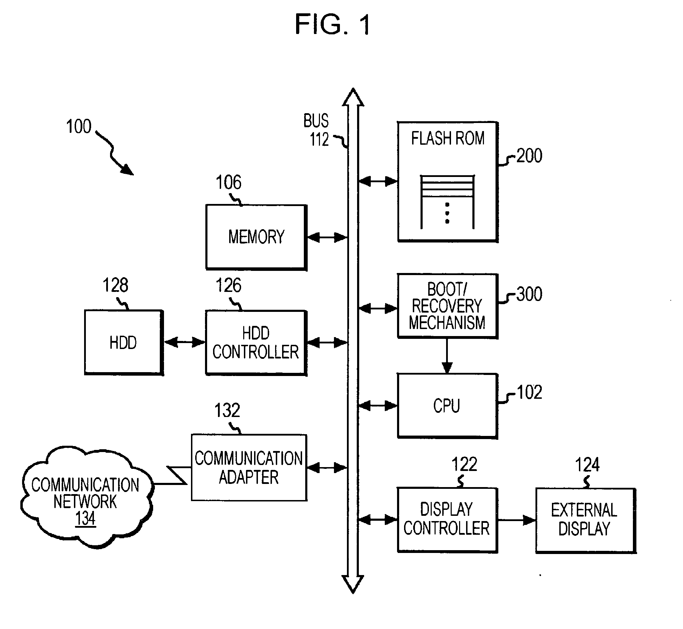

Fig. 1 shows an information processing system 100 having boot/recovery functions of normally booting or starting up the system even if a ROM image storing a BIOS program has a problem or failure, and recovering the damaged ROM image. The information processing system 100 includes a CPU 102, a ROM 200 that includes multiple ROM images each storing a BIOS program, a memory 106 that includes a RAM and an NVRAM, and a boot/recovery mechanism 300 according to this invention. All these components are coupled to a system bus 112. The boot/recovery mechanism 300 will be described in detail later. The NVRAM retains information even after the system 100 is powered off. Also coupled to the system bus 112 are an external display 124 via a display controller 122 as an input/output controller, and a hard disk drive (HDD) 128 as an auxiliary storage device via an HDD controller 126. The storage media such as the ROM 200 and HDD 128 are allowed to store the code of a computer program for giving instructions to the CPU 102 in collaboration with an operating system (OS) so as to implement this invention, as well as to store various types of data. The system bus 112 can also be coupled to a communication network 134 via a communication adapter 132.

At power-on of the information processing system 100, the CPU 102 sets up its operation parameters (many of them are stored in the memory 106), initializes the memory 106, executes inspection and initialization of system components, and boots the operating system before starting usual user operations. When power is supplied to the information processing system 100, the CPU 102 as a system processor begins to execute a part of a BIOS program called "power on reset (POR)."

The CPU 102 controls the entire information processing system according to the code of a computer program written to the memory 106. Also, the CPU 102 is made accessible to the memory 106 or the like according to data on the BIOS program stored in the ROM 200 at a boot. The ROM 200 is preferably a programmable flash ROM. A flash ROM is a memory that is readable and writable and whose content is retained even at power-off. It stores BIOS data to be used to perform a process such as setup of an input-output device of an information processing system (also referred to as a "computer system") at a boot of the system.

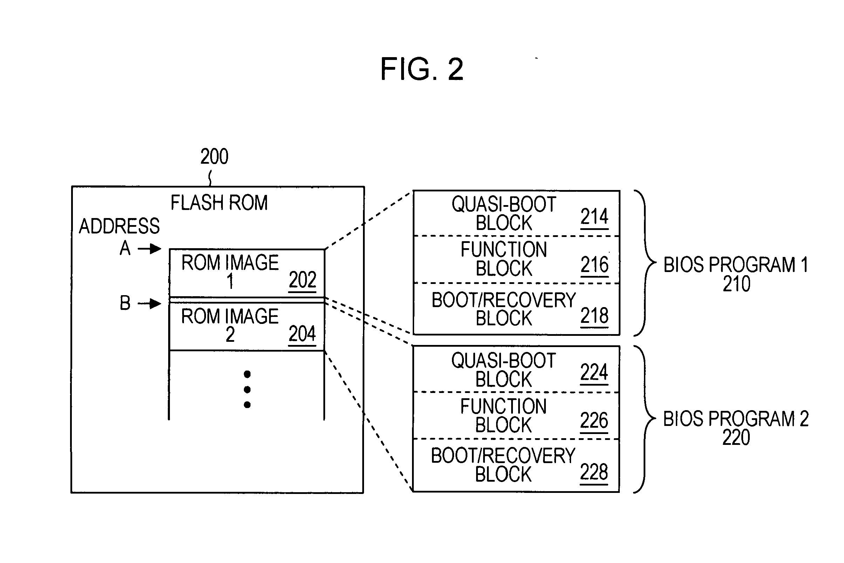

The ROM 200 will now be described using a flash ROM. Fig. 2 shows details of flash ROM 200 including multiple (two in Fig. 2) BIOS programs. A data block that is stored in a flash ROM and has a start address and includes an executable program code and data, as a whole, is called a "ROM image." In general, a ROM image is stored in a memory such as a ROM, a programmable read-only memory (PROM), or an erasable programmable read-only memory (EPROM), and includes a file, an executable program code, or data. The ROM 200 includes multiple ROM images that are rewritable and bootable. A ROM image 1 202 and a ROM image 2 204 shown in FIG. 2 have identical capacities and store identical contents when they are normal. In other words, the ROM image 2 is a replica or copy of the ROM image 1. In the address space of the ROM, the ROM image 1 is stored from a start (upper part) address A and the ROM image 2 is stored from a start (lower part) address B.

As shown in Fig. 2, the ROM image 1 202 includes a BIOS program 1 210. The BIOS program 1 210 includes:(1) a rewritable quasi-boot block 214 (called a "quasi-boot block" because it performs an identical function to an ordinary boot block but is different from an ordinary boot program in that it is rewritten) that includes the code of an initialization program to be read initially by CPU 102 at a boot, (2) a function block 216 that includes initialization data for a peripheral device such as memory 106, and (3) a boot/recovery block 218 that stores a program code (for example, a program code for comparing ROM images) for performing the boot/recovery function according to this invention. On the other hand, an ordinary BIOS program includes a boot block and a function block(s) (see FIGS. 12(a) and 12(b)). The ROM image 2 204 is a replica of the ROM image 1 202 and includes BIOS program 2 220 that has the same content as BIOS 1 210 when the ROM image 2 204 is normal. Specifically, a BIOS program 2 220 includes a quasi-boot block 224, a function block 226, and a boot/recovery block 228 that are identical to the blocks in the BIOS program 1 210 when the BIOS program 2 220 is normal. In Fig. 2, multiple ROM images is stored in one ROM; however, the ROM images may be separately stored in different multiple ROM devices. A case in which multiple ROM images are stored in a ROM will be described below.

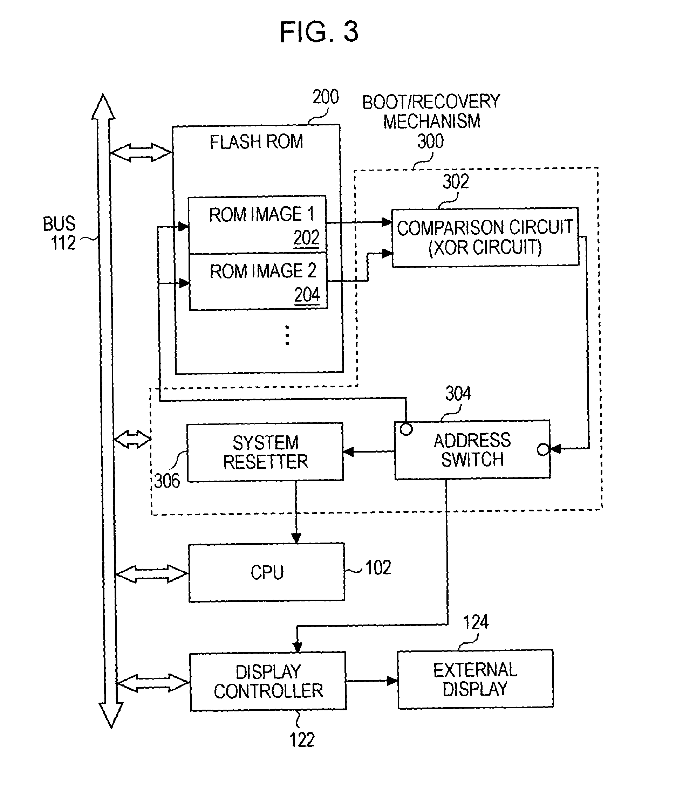

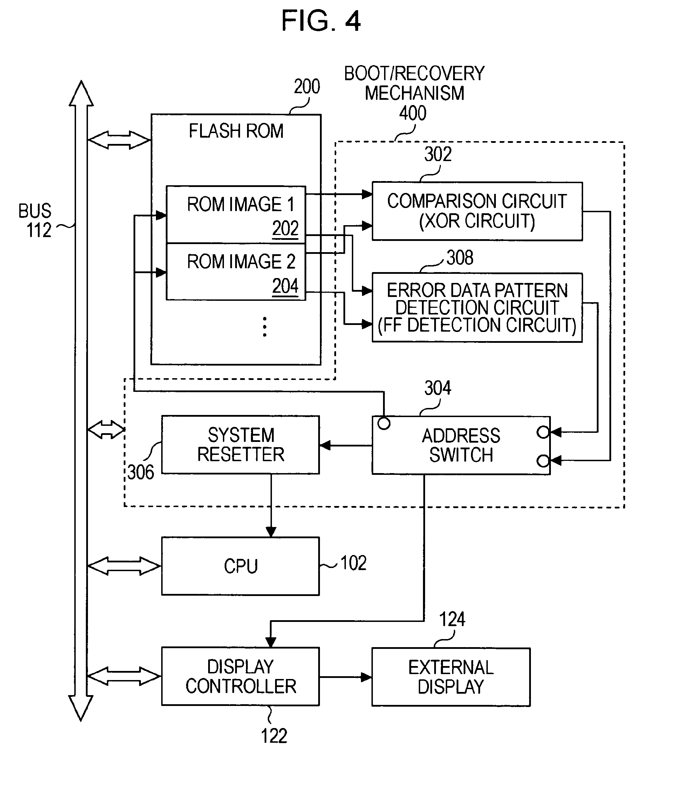

As shown in Fig. 3, the basic configuration of the boot/recovery mechanism 300 according to this invention includes a comparison circuit 302 for comparing multiple ROM images outputted from the flash ROM 200, an address switch 304 for switching between the addresses of ROM images, and a system resetter 306. While an exclusive OR (XOR) circuit will be used as comparison circuit 302 in the description below, the comparison circuit 302 is not limited to an XOR circuit. As shown in Fig. 4, a boot/recovery mechanism 400 preferably includes an error data pattern detection circuit 308 to detect which of ROM images is damaged. This boot/recovery mechanism can be packaged using an IC chip, e.g., a field programmable gate array (FPGA).

A function of the boot/recovery mechanism 300 is to select another ROM image even if a ROM image selected at a boot of the information processing system is damaged (at this time, the comparison circuit detects that two ROM images, which must have identical contents when they are normal, are different), to reset the system, more specifically, the CPU using a system resetter, and to reboot the system using a newly selected ROM image. Another function of the boot/recovery mechanism 300 is to execute a boot/recovery program stored in an undamaged ROM image by CPU to replace data on the damaged ROM image with that on the undamaged ROM image, that is, to replicate (also referred to as "copy") the image content.

Fig. 3 shows an example of the configuration of an information processing system according to a first embodiment of this invention. As shown in Fig. 3, the information processing system includes the rewritable flash ROM 200 that includes multiple ROM images (ROM image 1 202 and ROM image 2 204) that include identical data contents when they are normal. The system according to this embodiment also includes the boot/recovery mechanism 300. The boot/recovery mechanism 300 includes the comparison circuit 302 for comparing ROM images outputted from the flash ROM as storage means, the address switch 304 for switching between ROM images in response to a comparison result from comparison circuit 302, and the system resetter 306 for resetting the CPU (system) in response to the switching between addresses, that is, between ROM images. A program code for outputting the ROM images is preferably stored in the ROM 200. Further, the system is configured so that the CPU 102 executes the BIOS program of any one of multiple ROM images, the ROM images 202 and 204, in the flash ROM 200 via the bus 112.

As shown in Fig. 4, the boot/recovery mechanism 400 in an information processing system according to a second embodiment of this invention includes the error data pattern detection circuit 308 for detecting which of the ROM images 202 and 204 is damaged, in addition to the configuration shown in Fig. 3. The error data pattern detection circuit 308 detects whether or not there is an error data pattern (e.g., FF data) in ROM images outputted from the flash ROM 200. While a case in which multiple ROM images that have identical contents when they are normal are included in a ROM device, e.g., a flash ROM has been described above, multiple ROM devices, each of which includes ROM images having identical contents, may be used instead.

The comparison circuit 302 includes, for example, a difference circuit for obtaining differences between data signals from data buses coupled to a ROM, including multiple signal lines, and an OR circuit for obtaining an OR result of the obtained difference signals. If two ROM images have identical data, all difference signals each have an identical value 0 and the OR circuit outputs a value 0. If the two ROM images have different data, any one of difference signals has a value 1 and the OR circuit outputs a value 1. In other words, checking the output of the OR circuit allows the two ROM images to be compared. As the comparison circuit 302, an XOR circuit, whose circuit configuration is relatively simple, may be used. In this case, a general XOR circuit may be used.

An example of the address switch 304 is a circuit for outputting a chip select (CS) signal for selecting an address line A having a value 1 or a value 0, which is a circuit serving to invert a value outputted from an output pin. For example, if the circuit receives a signal (value 1) from the comparison circuit while a value 0 is outputted as the address line A (refers to start address of ROM image 1) from the output pin, the circuit changes the value of the address A to be outputted from the output pin, to a value 1. Switching between the ROM images 1 and 2 is controlled by a CS signal for selecting the address line corresponding to these ROM images. As for operations, if the ROM image 1 is initially selected, the value of the address A is 0 and the CS signal indicates the ROM image 1. However, if the address switch 304 receives a value 1 from the comparison circuit because the ROM images have different contents, the address switch 304 makes the address line a value 1 to switch to the ROM image 2 so that the output of the CS signal indicates the ROM image 2. For example, the address switch 304 is realized by a flip-flop circuit for inverting an output value each time a signal from the comparison circuit is inputted.

System resetter 306 generates a reset signal to reset the CPU 102 of the system 100 upon receiving a signal indicating operation (or performance) of switching between ROM images from the address switch 304.

Further, it is also possible to display the state of a system error or the like on the external display 124 or the like via the display controller 122 in response to a signal from the address switch 304.

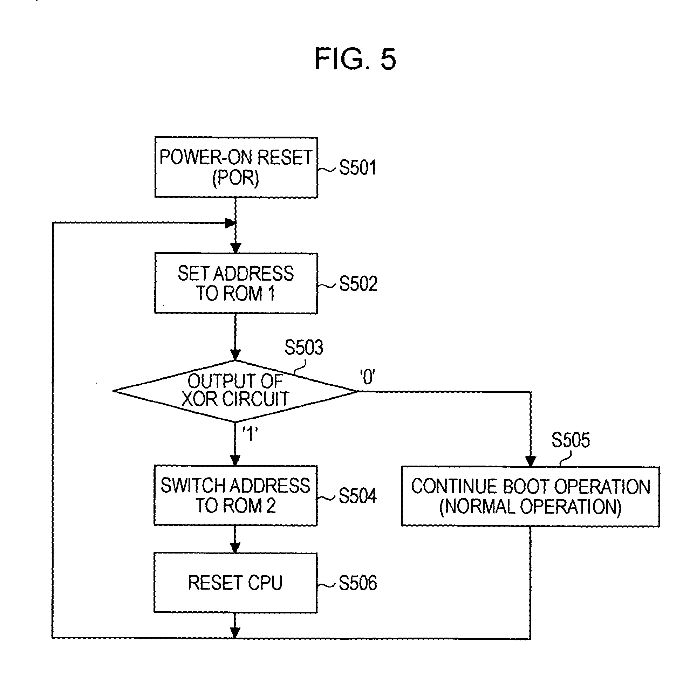

Fig. 5 shows a flowchart indicating the operations of the information processing system according to the first embodiment shown in Fig. 3. In these operations, the damaged ROM image 1 is switched to the normal ROM image 2. In the following description and the corresponding drawings, ROM images such as the ROM images 1 and 2 will be abbreviated as ROM 1, ROM 2, or the like. It is assumed that if the system boots up normally, the ROM 2 204 includes a BIOS program identical to that in the ROM 1 202, in other words, an identical data block.

When power is turned on or the CPU is initially reset, that is, when power-on reset (POR) is performed (S501), the address is set to that of the ROM 1 by the address switch to select the ROM 1 (S502). Thus data in the ROM 1 is outputted to the CPU. Then data outputs of the ROMs 1 and 2 are inputted to an XOR circuit serving as a comparison circuit. An XOR computation is performed to compare the data outputs, and which operation should be taken next is determined on the basis of a result of the computation (S503). If data is normally outputted from the ROM 1 to the CPU, the same data as that in the ROM 1 is outputted from the same address of the ROM 2 to the XOR circuit. Thus the output based on a result of the computation in the XOR circuit 302 becomes "0" (value 0), and the boot operation continues normally (S505). If data in the ROM 1 is damaged in step S503, data in the ROM 1 and data in the ROM 2 are not matched, that is, these pieces of data have different contents. Thus the output of the XOR circuit becomes "1" (value 1) and a boot error is detected. If an error is detected, the address switch 304 switches to the address of the ROM 2 in order to output data in the ROM 2 to the CPU, that is, in order to switch to a BIOS program in the ROM 2 (S504). Subsequently, the CPU 102 is reset using system resetter 306 in response to the address switch and then rebooted using the BIOS program in the ROM 2 (S506). In the first embodiment, the image data in the ROM 1 is replaced with that in the ROM 2 assuming that the ROM 1 has a problem. In other words, it is not detected which of the ROM images is damaged. Note that if the image data in the ROM 2 is initially outputted to the CPU, operations will be performed with the ROM 1 and the ROM 2 interchanged with each other.

In the configuration shown in Fig. 3, it is assumed that the ROM image having a problem (or failure) or the damaged ROM image is a ROM image that has initially outputted image data. Therefore it cannot be determined which of the ROM images has a problem. For this reason, an information processing system according to a second embodiment in which the boot/recovery mechanism further includes a component for detecting which of the ROM images 202 and 204 is damaged is shown in Fig. 4. In Fig. 4, the boot/recovery mechanism 400 further includes the error data pattern detection circuit (also referred to as an "FF detection circuit" for short) 308 for detecting which of the ROM images has a problem if the comparison circuit detects an error. Specifically the information processing system according to the second embodiment includes the flash ROM 200 including multiple ROM images, ROM images 202 and 204 (ROM 1 and ROM 2), which have identical contents, the comparison circuit 302 (realized by an XOR circuit) that is coupled to the flash ROM and compares the contents of the ROM images, the address switch 304 for switching among multiple ROM images (two in this case) in response to a result of the comparison (computation) from the comparison circuit 302, the error data pattern detection circuit 308 for detecting which of the ROM images is damaged, and the system resetter 306. The information processing system further includes the CPU 102, which is coupled to the address switch 304 via the system resetter 306.

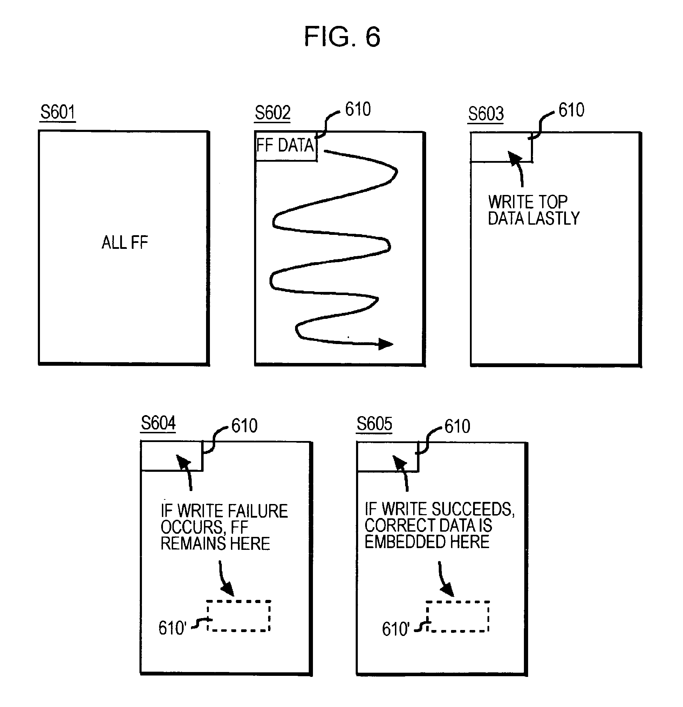

A method for writing data (including a program code; the same goes for the description below) to the flash ROM will now be described. The operations of the error data pattern detection circuit (FF detection circuit) 308 are carried out using this method. Fig. 6 shows a method for writing data to the ROM in the configuration shown in Fig. 4. Steps shown below are taken in principle.
1) Erase the region of the current ROM image (S601). Data in the flash ROM will be erased on a block-by-block basis according to an erase command. At this time all the erased blocks will become "1", that is, FF.
2) Write parts of a new ROM image except for a top part (610) of the initialization code to the ROM (S602).
3) Write normal data to the top part 610 of the initialization code of the new ROM image (S603).

A feature of this write method is that if a data writing to the ROM has succeeded, all data is written without a problem (S605). However, if a problem has occurred in writing data due to a problem or for other reasons, normal data is yet to be written to the top part 610 of the ROM image and FF data remains there(S604). If FF data is left in the region of the ROM 1 and is not left in the region of the ROM 2, it is understood that normal data is written to the ROM 2. While an example in which data is written to parts of the initialization code except for the top part 610 thereof has been described in Fig. 6, an identical arbitrary address positions 610' seen from the respective start addresses of the ROM 1 and the ROM 2 may be used instead of the top parts 610. Specifically, checking if FF data is left at the tops 610 or the arbitrary positions 610' to check which of the ROMs has a problem after an error has been detected by the XOR circuit in the configuration shown in Fig. 4 allows a ROM image having a problem to be identified.

As with the comparison circuit 302, the error data pattern circuit 308 includes a difference circuit for obtaining differences between data signals from data buses coupled to ROM, including multiple signal lines, and an OR circuit for obtaining an OR result of the obtained difference signals. If a difference between data in a normal ROM image and a data signal from a ROM image including an error data pattern (e.g., OxFF) is obtained and then a value 1 is outputted by the OR circuit that has received the obtained difference signal outputs, it is demonstrated that the pieces of data in the ROM images have different contents. This allows an error data pattern to be detected.

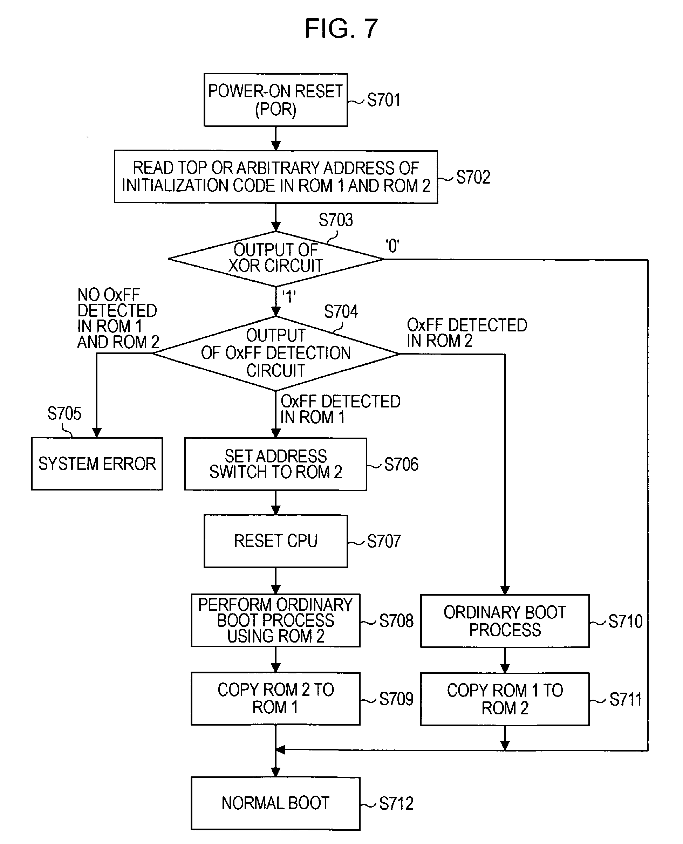

Fig. 7 shows a flowchart of the operations of the information processing system according to the second embodiment shown in Fig. 4. For the sake of simplicity, assume that data (including a program code) in the ROM 1 is initially outputted to the CPU to boot the BIOS program in the ROM 1. When power is turned on or the CPU is initially reset, that is, when POR is performed (S701), the tops of the initialization codes (or identical addresses of arbitrary positions) and images are written in the ROM 1 and the ROM 2 (S702). Subsequently the image outputs of the ROM 1 and the ROM 2 are inputted to the XOR circuit 302, and which operation should be taken next is determined based on a result of a computation (S703). If the image outputs from the identical addresses of the ROMs 1 and 2 are identical, that is, if the XOR circuit outputs "0" (value 0), the system will boot up normally in this manner (S712). If the XOR circuit 302 outputs "1" (value 1), the FF detection circuit 308 detects which of the ROMs still contains FF data (OxFF) after a write to the ROM has failed (S704). If OxFF is detected in the ROM 1, in other words, if the ROM 1 is damaged, the address switch 304 switches to the ROM 2 (S706), then the system resetter 306 resets the CPU (S707), and an ordinary boot process is performed using the ROM 2 (S708). Subsequently the ROM 2, whose data is normal, is copied to the ROM 1, whose data is damaged, that is, the image of the ROM 1 is replaced with the image of the ROM 2 (S709). If the FF detection circuit 308 detects OxFF not in the ROM 1 but in the ROM 2, the ordinary boot process is continued (S710) in that manner. Subsequently the normal ROM 1 is copied to the ROM 2 in which the image such as data is damaged (S711). If OxFF is detected in none of the ROMs 1 and 2, a system error is outputted to the external display 124 or the like via display controller 122 (S705).

Note that if data in the ROM 2 is initially outputted to the CPU, the above-mentioned steps are taken with the ROMs 1 and 2 interchanged with each other.

Note that in the description below and the corresponding flowcharts, booting the system using a BIOS program in a ROM image may be referred to as "booting (performing a boot process) using ROMx (x is an integer)," and replicating a ROM image to another ROM image referred to as "copying the ROM 2 to the ROM 1", for example.

If a ROM image is damaged by a problem other than a write operation to the ROM image during operation of the information processing system, it is also possible to detect such a problem and to switch the damaged ROM image to a normal ROM without resetting the system.

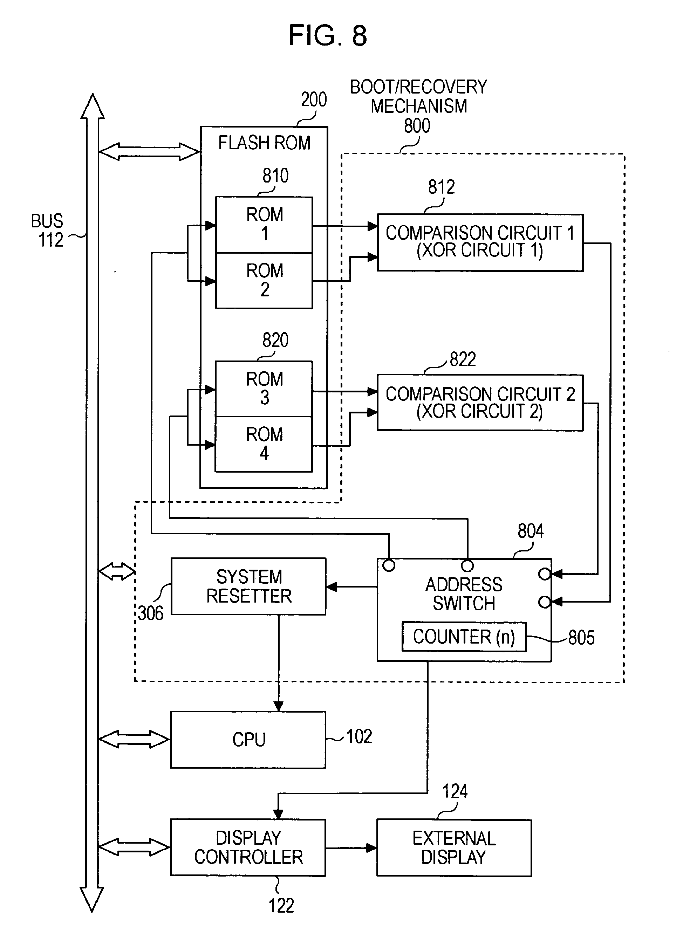

Fig. 8 shows an information processing system according to a third embodiment of this invention. The third embodiment is an extension of the basic configuration shown in Fig. 3 and includes a boot/recovery mechanism 800 that allows normal boot of the information processing system as well as recovery of a damaged ROM image, without using the error data pattern detection circuit(FF detection circuit) 308. In the description below and the corresponding drawing, ROM image x (x is an integer) is abbreviated as ROMx. Each ROM image includes a BIOS program as shown in Fig. 2. The flash ROM 200 shown in Fig. 8 includes multiple ROM images, four ROM images here, and two ROM images forms an image pair. In the description below, the number x of an image pair is represented by image pair (x) (x is an integer). As shown in Fig. 8, the flash ROM 200 includes (1) a ROM image pair (1) 810 that has a pair of the ROMs 1 and 2, two ROM images that have identical capacities and identical data contents (in other words, the ROM 2 is a replica of the ROM 1) and (2) a ROM image pair (2) 820 that has a pair of a ROM 3 and a ROM 4, two ROM images that have identical capacities and identical data contents (in other words, ROM 4 is a replica of ROM 3).

In addition to the flash ROM 200 described above, the information processing system shown in Fig. 8 includes a comparison circuit 1 (XOR circuit 1) 812 and a comparison circuit 2 (XOR circuit 2) 822 that couple the respective image outputs of ROM images (ROM 1 and ROM 2, ROM 3 and ROM4) forming the ROM image pairs 810 and 820, respectively, for example, using an XOR to compare these image outputs, the address switch 804 for switching between two ROM image pairs, and the system resetter 306 coupled to the address switch 804 for resetting the CPU 102. The ROM 3 may be an identical ROM image to the ROM 1 or a ROM image different from the ROM 1. In other words, a BIOS program stored in the ROM 3 may be an identical BIOS program to that stored in the ROM 1 or a BIOS program different from that stored in the ROM 1.

While an example in which XOR circuits are used as comparison circuits is described here, other types of comparison circuits can be used. Incidentally the address switch 804 includes a counter (n) 805 for counting the number n corresponding to the currently selected ROM image pair so as to select a ROM image pair and thus boot a BIOS program in each ROM image. The n-th ROM image pair is made up of two ROM images, ROM 2n-1 and ROM 2n (n is an integer).

If one of two ROM images (having identical contents when they are normal) forming a ROM image pair initially booted up is damaged, the corresponding XOR circuit outputs "1" (value 1). This makes it possible to detect that the ROM image pair currently being booted is damaged. If it is detected that the ROM image pair currently being used for a boot is damaged, the following series of operations can be performed: a signal (value 1) is sent to the address switch 804, the address switch 804 switches to the address of another ROM image pair, and a boot is attempt using a BIOS program in one of ROM images forming the ROM image pair to which the address switch 804 has switched.

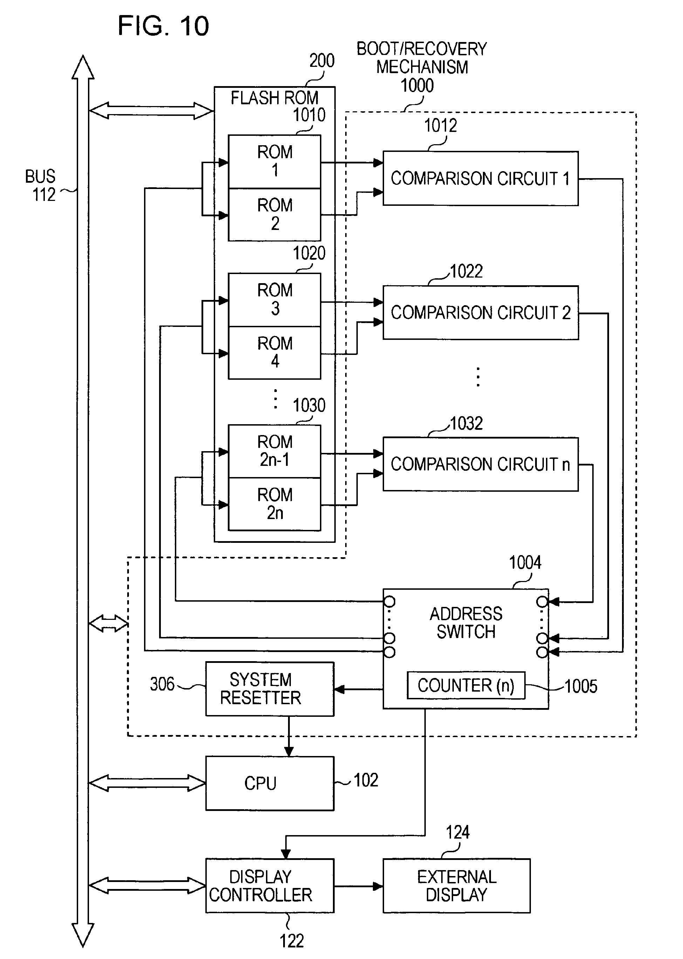

Further, in order to enhance reliability of an information processing system while preventing occurrence of a boot error as much as possible, it is possible to extend the configuration shown in Fig. 8 to a configuration having 2N (N is an integer equal to or more than 2) units, which means an even number, of ROM images, as shown in Fig. 10. ROM 2n-1 and ROM 2n (herein, ROM 1, ROM 2, ROM 3, ROM 4...) in n units of ROM image pairs, ROM image pairs 1010, 1020, 1030 ..., have an identical ROM image. In other words, one of two ROM images included in a ROM image pair is a replicate of the other ROM image and these ROM images have an identical BIOS program. ROM images included in another ROM image pair may have different images, that is, different BIOS programs. It is possible to couple comparison circuits 1012, 1022, ... 1032 (realized by XOR circuits; total number is n) to the corresponding ROM image pairs, respectively. The system is booted up by stopping booting up using a ROM image pair (BIOS program therein) including a damaged ROM image, selecting a normal ROM image pair, and using a BIOS program included in one of ROM images forming the selected normal ROM image pair. Further it is also possible to replace the ROM images forming the ROM image pair having the damaged ROM image with normal ROM images so as to recover the damaged ROM image in preparation for the subsequent boot. It is conceivable that the case ofN = 1 corresponds to Fig. 3, which is the basic configuration. When N = 1, that is, when the number of ROM images is two, it is not possible to determine which of ROMs is damaged, as described above. On the other hand, the configuration shown in Fig. 8 or 10 is different from that shown in Fig. 3 in that it allows determination which of ROM image pairs has a problem.

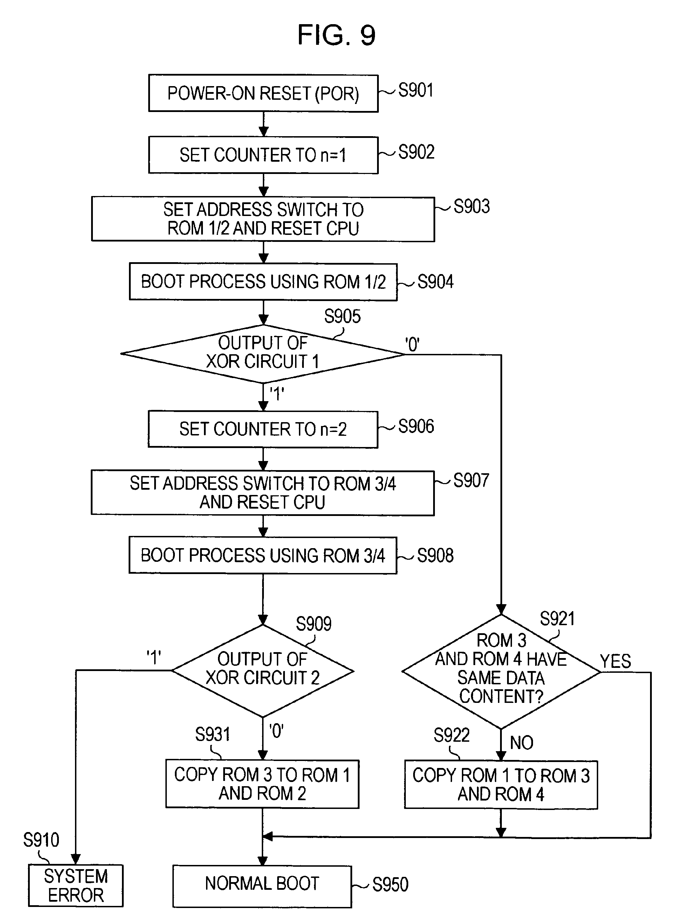

Operations of the information processing system having four ROM images that has the basic configuration according to the third embodiment will be described with reference to FIG. 8 and the flowchart shown in FIG. 9. As shown in FIG. 8, four ROM images form two ROM image pairs. In the description below, the number x of a image pair is represented as "image pair (x)" (x is an integer). Specifically a case in which a system configuration including the image pair (1) 810 made up of ROM 1/ROM 2 and the image pair (2) 820 made up of ROM 3/ROM 4 is used will be described with accordance with the flowchart shown in FIG. 9. In Fig. 9, "ROM 1/2" means the image pair formed by the ROM image 1 (ROM 1) and ROM image 2 (ROM 2). "BOOT PROCESS USING ROM 1/2" means performing a boot process using a BIOS program in one of the ROM images forming the image pair (ROM image 1 and ROM image 2). The same goes for "ROM 3/4."

In FIG. 9, power-on reset is initially performed (S901). In order to count the number n of an image pair including a ROM image with which the system is booted, the counter is initially set to n = 1 (S902). At this time, an image pair formed by ROM image 2n-1 and ROM image 2n, that is, the ROMs 1 and 2 is selected. Then the address switch 804 is set to image pair (1) 810 formed by ROM 1/2, the CPU 102 is reset (S903), and a boot process is performed using a BIOS program in one of the ROM images forming the image pair (1) 810 (S904), for example, the ROM 1. Further, image outputs of ROM 1/ROM 2 go through a computation process in the XOR circuit 1 812 (S905). If the output is '0', it can be confirmed that the ROMs 1 and 2 have identical contents and are normal, and the image contents of the ROMs 3 and 4 are compared (S921). If the image contents are different, the image of the ROM 1 is copied to the images of the ROMs 3 and 4 (S922). If the ROMs 3 and 4 have identical contents, there is no problem. Therefore, the system continues to boot up in that manner, for example, using a BIOS program in the ROM 1 (S950). In step 921, the XOR circuit 2 822 is used to compare the image contents of the ROMs 3 and 4. Alternatively it is possible to cause the CPU to execute a program code that is stored in a bood/recovery block of the ROM 1 booted normally and is designed to compare ROM images.

If the output of XOR circuit 1 812 is '1' in step S905, counter (n) 805 is set to n = 2 by increasing the count by 1 (S906), the address switch 804 is set to the image pair (2) 820 formed by the ROMs 3 and 4, which is the second image pair formed by ROM images having the numbers 2n - 1 and 2n, and the CPU is reset (S907), and a boot process is performed using a BIOS program in one of the ROM images forming image pair (2) 820, for example, ROM 3 (S908). Further the image outputs of the ROMs 3 and 4 are inputted to the XOR circuit 2 822 and subjected to a computation process (S909). If the computation process results in '0', the image pair (2) 820 is normal. The image of the ROM image 3 (ROM 3) is copied to the ROM images 1 and 2 (ROM 1/ROM 2) forming the ROM image pair (1)810, which may be damaged (S931). Further a boot process is performed, for example, using a BIOS program in ROM 3 (S950). If the computation process results in'1' in step 909, it is considered that none of the two ROM image pairs has correct data. Thus a system error is displayed on the external display 124 via the display controller 122 (S910).

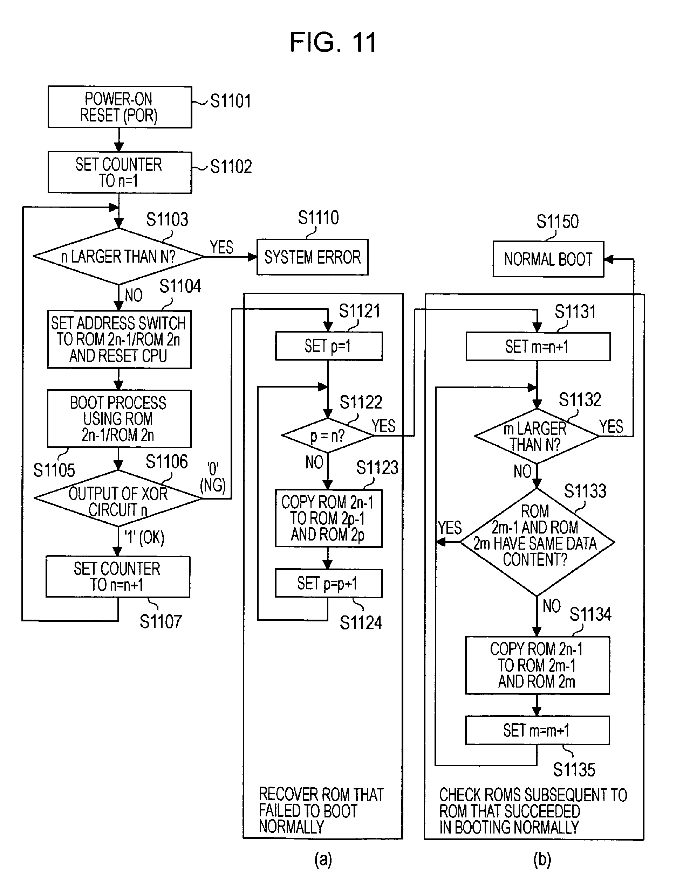

The configuration shown in FIG. 10 and the operations shown in the flowchart of FIG. 11 are the generalizations of the configuration shown in FIG. 8 and the operations shown in the flowchart of FIG. 9. Further FIG. 11 shows the operations to boot up the system and those to recover a damaged ROM image using the generalized FIG. 10 configuration. As shown in FIG. 11, power-on reset is performed (S1101) and then a counter 1005 is initially set to n = 1 (S1102). Subsequently the following operations are repeated in principle: with respect to the ROM image pairs count (N) depending on the system configuration and the number (n) of a ROM image pair including a ROM image that is about to boot up the system are compared using the counter 1005 (S1103); an address switch 1004 is sequentially set to n-th ROM image pair (corresponding ROM images are ROM 2n-1, ROM 2n) and the CPU 102 is reset (S1104); a boot process is performed using a BIOS program in one (usually, ROM 2n-1) of ROM 2n-1 and ROM 2n forming the ROM image pair (S1105); data in each of ROM 2n - 1 and ROM 2n, which are ROM images forming each image pair, goes through a computation process in the corresponding comparison circuit n (e.g., XOR circuit) 1012, 1022, ... 1032 to determine whether or not pieces of data in the ROM image pair are damaged (S1106); if there is a piece of damaged data (XOR circuit outputs '1'), the counter is increased by 1 to proceed to a boot process using the subsequent ROM image pair (S1107). In this way, steps 1103 to 1106 are repeated. If there is no damaged data in a ROM image pair (XOR circuit outputs '0'), the flowchart proceeds to processes for recovering a ROM image in a ROM image pair that has a number smaller or larger than that of the ROM image pair and that has failed to boot up the system normally ((a) and (b) flows in FIG. 11).

If any ROM image pair has succeeded in booting up the system normally and if the number p of a ROM image pair that has failed to boot up the system normally is smaller than the number n of the ROM image pair that has succeeded in booting up the system normally, a process for replacing (copying) the failed ROM image pair p (including ROM 2p-1 and ROM 2p; p is an integer) with ROM 2n-1 in the successful ROM image pair is performed with accordance with the steps shown in (a) of FIG. 11 in preparation for the subsequent boot (S1121 to S1124). For example, a case in which, if image pair (1) 810 formed by ROM 1/ROM 2 shown in FIG. 8 is damaged, the image of the ROM 3 included in the image pair (2) 820 formed by ROM 3/ROM 4, which has succeeded in booting up the system, is copied to the ROMs 1 and 2 corresponds to the steps 1121 to S1124 (n = 2, p = 1).

If a ROM image pair has succeeded in booting up the system normally but there are ROM image pairs with which no attempt to boot the system has been made, subsequent to the successful ROM image pair, the steps (S1131 to S1135) shown in FIG. 11(b) are processed. The ROM images (ROM 2m-1 and ROM 2m) forming a ROM image pair having the number m (m is an integer equal to or more than 2) with which no attempt to boot the system has been made are compared to each other to know whether or not the ROM images have identical image contents (S1133). If the ROM images have different image contents, ROM 2n-1 included in ROM image pair n that has succeeded in booting up the system is copied (replaced) to ROM 2m-1 and ROM 2m (S1134). For example, if the image pair (1) 810 formed by ROM 1/ROM 2 shown in FIG. 8 has succeeded in booting up the system normally, the contents of ROM images in the subsequent image pair (2) 820 formed by the ROMs 3 and 4 are also checked. If the contents are different, the data content of the ROM 1 that has succeeded in booting up the system normally is copied to the ROMs 3 and 4. This case corresponds to the steps 1131 to 1135 (n = 1, m = 2) in (b) of FIG. 11.

The count of p and m, comparison between ROM 2m-1 and ROM 2m, or the like can be included in a program code of a boot/recovery block (see FIG. 2) stored in a ROM image.

While it is conceivable that an information processing system according to this invention is a computer system, such as a personal computer as shown in FIG. 1, in the embodiments described above, the invention is not limited to a computer system. This invention is applicable to information processing systems in general, such as PC servers and workstations. Windows XP (R), AIX (R), Linux (R), or the like is preferable as an operating system; however, this invention is not limited to a particular operating system environment.

While it is also possible to store the current status of the address switch in the flash ROM so as to retain the current status even at power-off in the above-mentioned embodiments, the current status may be stored in a memory such as a non-volatile RAM (NVRAM).

While the above-mentioned embodiments are configured so that groups made up of two ROM images, each of which has a BIOS program, are formed among multiple ROM images in a ROM and switching between those groups are performed, it is also possible to form groups made up of three or more ROM images (each of which has a BIOS program) and to perform switching between these groups sequentially using an address switch.

While a flash ROM is used as a memory for storing a BIOS program in the above-mentioned embodiments, a BIOS program may be stored in an electronically erasable and programmable read-only memory (EEPROM) or the like.

While the embodiments of this invention have heretofore been described, this invention is not limited to these embodiments. Alternatively, various improvements, modifications, or alterations can be made to these embodiments on the basis of the knowledge of those skilled in the art without departing from the scope of this invention.

## Claims

1. An information processing system (10) including a plurality of basic input output system (BIOS) programs (210, 220), the system comprising:
a memory (200) including:
a first read-only memory (ROM) image (202) storing a BIOS program; and
a second ROM image (204) serving as a replica of the first ROM image; and
a switch (304), the switch initially selecting the first ROM image so as to boot the system using the BIOS program of the first ROM image and, if the contents are different, switching the selected first ROM image (202) to the second ROM image (204);
**characterised in that** the system further comprises:
a comparison circuit (302) coupled to the memory, the comparison circuit (302) comparing contents of the first and second ROM images outputted from the memory (200);
an error data pattern detector (308) coupled to the memory and the switch (304), the error data pattern detector (308) detecting an error data pattern in the first and second ROM images outputted from the memory (200) and inputting a detection result to the switch (304), the switch switching the selected first ROM image (202) to the second ROM image (204), and
wherein the switch (304) is coupled to the comparison circuit (302), the contents of the first and second ROM images being determined to be different as a result of a comparison performed by the comparison circuit (302).

2. The information processing system (10) according to claim 1, further comprising
a system resetter (306) coupled to the switch (304), the system resetter resetting the system in response to switching between ROM images (202, 204) performed by the switch.

3. The information processing system (10) according to claim 1 or claim 2, wherein if the error data pattern is detected in one of the first and second ROM images (202, 204) by the error data pattern detector (308), the switch (304) switches to another ROM image.

4. The information processing system (10) according to any of the preceding claims,
wherein:
the comparison circuit (302) is an exclusive OR circuit; and
the switch (304) is an address switch for switching between addresses of ROM images (202,204).

5. The information processing system (10) according to any of the preceding claims, wherein:
the memory (200) is a flash ROM; and
the first and second ROM images (202, 204) are stored in one flash ROM or separately stored in different flash ROMs.

6. A method for booting an information processing system (10), the information system comprising a memory (200) including a first read-only memory (ROM) image (202) storing a basic input output system (BIOS) program and a second ROM image (204) serving as a replica of the first ROM image (202), the method comprising the steps of:
selecting (S502) a first ROM image (202) so as to boot the system using the BIOS program of the first ROM image;
comparing (S503) the contents of the first and second ROM images; and
if the contents are different in the comparison, switching (S504) the selected first ROM image (202) to the second ROM image (204),
**characterised in that**:
the comparing step is performed by a comparison circuit (302) coupled to the memory (200), the comparison circuit (302) comparing contents of the first and second ROM images outputted from the memory (200),
detecting (S704) whether or not there is an error data pattern in the ROM images by comparing contents of the first and second ROM images outputted from the memory (200), and
response to said detection step, switching (S706) the selected first ROM image (202) to the second ROM image (204).

7. The method according to claim 6, further comprising the step of
if the contents are identical in the comparing step (S503), continuing (S505) the boot using the BIOS program of the first ROM image (202).

8. The method according to claim 6 or claim 7, further comprising the step of
if an error data pattern is detected in the second ROM image (204), replacing (S711) the second ROM image with the first ROM image (202).

9. The method according to any of claims 6 to 8, further comprising the step of
if an error data pattern is detected in none of the first (202) and second (204) ROM images, displaying (S705) a system error.

10. A computer program comprising program code means adapted to perform the method of any of claims 6 to 9 when said program is run on a computer.

## Patentansprüche

1. Datenverarbeitungssystem (10), das eine Vielzahl von grundlegenden Eingabe-Ausgabesystem-(BIOS-)Programmen (210, 220) enthält, wobei das System Folgendes umfasst:
einen Speicher (200), der Folgendes enthält:
ein Abbild (202) eines ersten Nur-Lese-Speichers (ROM), das ein BIOS-Programm speichert; und
ein Abbild (204) eines zweiten ROM, das als eine Nachbildung des ersten ROM-Abbilds dient; und
einen Schalter (304), wobei der Schalter zunächst das Abbild des ersten ROM auswählt, um das System mit Hilfe des BIOS-Programms des ersten ROM-Abbilds zu starten, und, wenn die Inhalte unterschiedlich sind, das ausgewählte erste ROM-Abbild (202) zu dem zweiten ROM-Abbild (204) schaltet,
**dadurch gekennzeichnet, dass** das System des Weiteren Folgendes umfasst:
eine Vergleichsschaltung (302), die mit dem Speicher verbunden ist, wobei die Vergleichsschaltung (302) den Inhalt des ersten und des zweiten ROM-Abbilds, die aus dem Speicher (200) ausgegeben werden, vergleicht;
einen Fehlerdatenmuster-Detektor (308), der mit dem Speicher und dem Schalter (304) verbunden ist, wobei der Fehlerdatenmuster-Detektor (308) ein Fehlerdatenmuster in dem ersten und dem zweiten ROM-Abbild, die aus dem Speicher (200) ausgegeben werden, erkennt und ein Erkennungsergebnis in den Schalter (304) eingibt, wobei der Schalter das ausgewählte erste ROM-Abbild (202) zu dem zweiten ROM-Abbild (204) schaltet, und
wobei der Schalter (304) mit der Vergleichsschaltung (302) verbunden ist, wobei der Inhalt des ersten und des zweiten ROM-Abbilds als Ergebnis eines von der Vergleichsschaltung (302) durchgeführten Vergleichs als unterschiedlich festgestellt wird.

2. Datenverarbeitungssystem (10) nach Anspruch 1, das des Weiteren
eine System-Rücksetzeinrichtung (306) umfasst, die mit dem Schalter (304) verbunden ist, wobei die System-Rücksetzeinrichtung das System als Reaktion auf das von dem Schalter durchgeführte Schalten zwischen den ROM-Abbildern (202, 204) zurücksetzt.

3. Datenverarbeitungssystem (10) nach Anspruch 1 oder Anspruch 2, wobei der Schalter (304), wenn das Fehlerdatenmuster von dem Fehlerdatenmuster-Detektor (308) entweder in dem ersten oder in dem zweiten ROM-Abbild (202, 204) erkannt wird, zu einem anderen ROM-Abbild schaltet.

4. Datenverarbeitungssystem (10) nach einem der vorhergehenden Ansprüche, wobei:
es sich bei der Vergleichsschaltung (302) um eine Exklusiv-ODER-Schaltung handelt; und
der Schalter (304) ein Adressenschalter ist, um zwischen Adressen von ROM-Abbildern (202, 204) zu schalten.

5. Datenverarbeitungssystem (10) nach einem der vorhergehenden Ansprüche, wobei:
der Speicher (200) ein Flash-ROM ist; und
das erste und das zweite ROM-Abbild (202, 204) in einem einzigen Flash-ROM gespeichert oder in verschiedenen Flash-ROMs getrennt gespeichert werden.

6. Verfahren zum Starten eines Datenverarbeitungssystems (10), wobei das Datenverarbeitungssystem einen Speicher (200) umfasst, der ein Abbild (202) eines ersten Nur-Lese-Speichers (ROM), das ein grundlegendes Eingabe-/Ausgabe-System-(BIOS-)Programm speichert, und ein zweites ROM-Abbild (204), das als eine Nachbildung des ersten ROM-Abbilds (202) dient, enthält, wobei das Verfahren die folgenden Schritte umfasst:
Auswählen (S502) eines ersten ROM-Abbilds (202), um das System mit Hilfe des BIOS-Programms des ersten ROM-Abbilds zu starten;
Vergleichen (S503) des Inhalts des ersten und des zweiten ROM-Abbilds; und
wenn die Inhalte bei dem Vergleich unterschiedlich sind,
Schalten (S504) des ausgewählten ersten ROM-Abbilds (202) zu dem zweiten ROM-Abbild (204),
**dadurch gekennzeichnet, dass**:
der Vergleichsschritt von einer Vergleichsschaltung (302) durchgeführt wird, die mit dem Speicher (200) verbunden ist, wobei die Vergleichsschaltung (302) den Inhalt des ersten und des zweiten ROM-Abbilds, die aus dem Speicher (200) ausgegeben werden, vergleicht,
Erkennen (S704), ob es in den ROM-Abbildern ein Fehlerdatenmuster gibt, indem der Inhalt des ersten ROM-Abbilds und der Inhalt des zweiten ROM-Abbilds, die aus dem Speicher (200) ausgegeben werden, miteinander verglichen wird, und
als Reaktion auf den Erkennungsschritt Schalten (S706) des ausgewählten ersten ROM-Abbilds (202) zu dem zweiten ROM-Abbild (204).

7. Verfahren nach Anspruch 6, das des Weiteren den folgenden Schritt umfasst:
wenn die Inhalte in dem Vergleichsschritt (S503) gleich sind, Fortsetzen (S505) des Startvorgangs mit Hilfe des BIOS-Programms des ersten ROM-Abbilds (202).

8. Verfahren nach Anspruch 6 oder Anspruch 7, das des Weiteren den folgenden Schritt umfasst:
wenn in dem zweiten ROM-Abbild (204) ein Fehlerdatenmuster erkannt wird, Ersetzen (S711) des zweiten ROM-Abbilds durch das erste ROM-Abbild (202).

9. Verfahren nach einem der Ansprüche 6 bis 8, das des Weiteren den folgenden Schritt umfasst:
wenn weder in dem ersten ROM-Abbild (202) noch in dem zweiten ROM-Abbild (204) ein Fehlerdatenmuster erkannt wird, Anzeigen (S705) eines Systemfehlers.

10. Rechnerprogramm, das ein Programmcode-Mittel umfasst, welches so ausgelegt ist, dass es das Verfahren nach einem der Ansprüche 6 bis 9 durchführt, wenn das Programm auf einem Rechner ausgeführt wird.

## Revendications

1. Système de traitement d' informations (10) incluant une pluralité de programmes d'entrée-sortie de base (BIOS) (210,220), le système comprenant :
une mémoire (200) incluant :
une première image (202) de mémoire à lecture seule (ROM) mémorisant un programme BIOS ; et
une seconde image ROM (204) servant de réplique de la première image ROM ; et
un commutateur (304), le commutateur sélectionnant initialement la première image ROM de manière à lancer le système en utilisant le programme BIOS de la première image ROM et, si les contenus sont différents, commuter la première image ROM sélectionnée (202) à la seconde image ROM (204) ;
**caractérisé en ce que** le système comprend en outre :
un circuit de comparaison (302), connecté à la mémoire, le circuit de comparaison (302) comparant les contenus de la première et la seconde image ROM sorties de la mémoire (200) ;
un détecteur de modèle de données d'erreur (308) connecté à la mémoire et au commutateur (304), le détecteur de modèle de données d'erreur (208) détectant un modèle de données d'erreur dans la première et la seconde image ROM délivrées depuis la mémoire (200) et entrant un résultat de détection dans le commutateur (304), le commutateur commutant la première image ROM (202) sélectionnée à la seconde image ROM (204) ; et
dans lequel le commutateur (304) est connecté au circuit de comparaison (302), les contenus de la première et la seconde image ROM étant déterminés être différents en conséquence d'une comparaison effectuée par le circuit de comparaison (302).

2. Système de traitement d'informations (10) selon la revendication 1, comprenant en outre :
un restaurateur de système (306) connecté au commutateur (304), le restaurateur de système restaurant le système en réponse à la commutation entre images ROM (202,204) effectuée par le commutateur.

3. Système de traitement d'informations (10) selon la revendication 1 ou 2, dans lequel si le modèle de données d'erreur est détecté dans une de la première et la seconde image ROM (202,204) par le détecteur de modèle de données d'erreur (308), le commutateur (304) commute à une autre image ROM.

4. Système de traitement d'informations (10) selon l'une quelconque des revendications précédentes, dans lequel :
le circuit de comparaison (302) est un circuit OU exclusif ; et
le commutateur (304) est un commutateur d'adresse pour commuter entre les adresses d'images ROM (202,204).

5. Système de traitement d'informations (10) selon l'une quelconque des revendications précédentes, dans lequel :
la mémoire (200) est une ROM flash ; et
la première et la seconde image ROM (202,204) sont mémorisées dans une ROM flash ou mémorisées séparément dans des ROMs flash différentes.

6. Procédé de lancement d'un système de traitement d'informations (10), le système d'information comprenant une mémoire (200) incluant une première image (202) de mémoire à lecture seule (ROM) mémorisant un programme de système d'entrée-sortie de base (BIOS) et une seconde image ROM (204) servant de réplique de la première image ROM (202), le procédé comprenant les étapes consistant à :
sélectionner (S502) une première image ROM (202) de manière à lancer le système en utilisant le programme BIOS de la première image ROM ;
comparer (S503) les contenus de la première et la seconde image ROM ; et
si les contenus sont différents lors de la comparaison,
commuter (S504) la première image ROM sélectionnée (202) à la seconde image ROM (204) ;
**caractérisé en ce que**
l'étape de comparaison est effectuée par un circuit de comparaison (302) connecté à la mémoire (200), le circuit de comparaison (302) comparant les contenus de la première et la seconde image ROM sorties de la mémoire (200) ;
détecter (S704) s'il y a un modèle de données d'erreur dans les images ROM en comparant les contenus de la première et la seconde image ROM sorties de la mémoire (200) ; et
en réponse à ladite étape de détection, commuter (S706) la première image ROM sélectionnée (202) à la seconde image ROM (204).

7. Procédé selon la revendication 6, comprenant en outre l'étape consistant à :
si les contenus sont identiques lors de l'étape de comparaison (S503), poursuivre (S505) le lancement en utilisant le programme BIOS de la première image ROM (202).

8. Procédé selon la revendication 6 ou 7, comprenant en outre l'étape consistant à :
si un modèle de données d'erreur est détecté dans la seconde image ROM (204), remplacer (S711) la seconde image ROM par la première image ROM (202).

9. Procédé selon l'une quelconque des revendications 6 à 8, comprenant en outre l'étape consistant à :
si un modèle de données d'erreur n'est détecté dans aucune de la première (202) et la seconde (204) image ROM, afficher (S705) une erreur de système.

10. Programme informatique comprenant des moyens de code de programme adaptés pour mettre en oeuvre le procédé selon l'une quelconque des revendications 6 à 9, quand ledit programme est exécuté sur un ordinateur.
